(19) Europäisches Patentamt
European Patent Office
Office européen des brevets

(11) **EP 2 187 515 A1**

(12) **EUROPEAN PATENT APPLICATION**

(43) Date of publication:
**19.05.2010 Bulletin 2010/20**

(51) Int Cl.:
***H02M 3/335*** *(2006.01)*

(21) Application number: **08425725.2**

(22) Date of filing: **12.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Magneti Marelli S.p.A.**
**20011 Corbetta (MI) (IT)**

(72) Inventor: **Nepote, Andrea**
**10078 Venaria Reale (Torino) (IT)**

(74) Representative: **Notaro, Giancarlo et al**
**Buzzi, Notaro & Antonielli d'Oulx**
**Via Maria Vittoria 18**
**10123 Torino (IT)**

(54) **DC-DC forward converter apparatus and corresponding conversion method**

(57)     A DC-DC forward converter apparatus is described, comprising:

- a transformer (20) including a primary winding (12) comprising a first end (12a) and a second end (12b), said transformer (20) being subject to switching cycles ($t_{on}$, $t_{off}$) of a voltage ($V_p$) on said primary winding (12);
- a first switching device (14) arranged so as to be connected between said second end (12b) and a ground node ($N_G$);
- a second switching device (24) arranged so as to be connected between said first end (12a) and a supply node ($N_i$);

said first switching device (14) and said second switching device (24) operating under the control of a timing associated with said switching cycles ($t_{on}$, $t_{off}$), synchronously and with a same duty cycle, according to the adjustment of the output quantities ($V_o$, $I_o$) of said converter apparatus; said converter apparatus being configured to operate a reset of said transformer (20), within a switch-off interval ($t_{off}$) defined by said timing ($t_{on}$, $t_{off}$), resulting in a reset voltage ($V_{reset}$) as voltage on said primary winding ($V_p$), and comprising means (45, 46) to reset the magnetic flux in the core of said transformer (20) at each switching cycle allowing the recirculation of a magnetization current ($I_m$) from said core in order to make null said magnetization current ($I_m$). According to the invention, said converter apparatus includes also a clamp circuit (47) comprising a capacitor (41) for storing magnetization energy as capacitor voltage ($V_C$) in order to generate a reset voltage ($V_{reset}$) greater than the supply voltage ($V_i$) of the converter and a rectification device (45).

Fig. 4

**EP 2 187 515 A1**

**Description**

The present invention relates to a DC-DC forward converter apparatus, comprising:

-    a transformer including a primary winding comprising a first end and a second end, said transformer being subject to voltage switching cycles on said primary winding;
-    a first switching device arranged so as to be connected between said second end and a ground node;
-    a second switching device arranged so as to be connected between said first end and a supply node,

said first switching device and said second switching device operating under the control of timing associated with said switching cycles, synchronously and with a same duty cycle, according to the adjustment of the output quantities of said converter apparatus; said converter apparatus being configured to operate a reset of said transformer, within a switch-off interval defined by said timing, resulting in a reset voltage as voltage on said primary winding, and comprising means to reset the magnetic flux in the core of said transformer at each switching cycle allowing the recirculation of a magnetization current from said core in order to make null said magnetization current.

DC-DC conversion apparatus are applied in many technological fields, such as those relating to mobile phones and laptop computers, which are battery-powered, in order to provide within such apparatus a different voltage level from that provided by a battery. However, DC-DC conversion is increasingly used in the automotive sector, particularly in hybrid vehicles, for example vehicles with internal combustion and electric engines, where it is necessary to manage energy on board the vehicle. On such hybrid vehicles two electric networks are usually present, respectively a traditional electric network for loads such as lights or the electronic control unit for controlling the internal combustion engine and a high-voltage electric network for the electric engine, which can operate, for example, at a voltage of about 600V. In this context, energy conversion systems are required capable of connecting the two electric networks, particularly to transfer energy from the high-voltage network powered by a specific battery, for example a lithium ion battery, to the traditional low-voltage network, using a converter. Creating a converter for this type of application is demanding since it requires components suitable for the power used. For this purpose, several stages or phases can be used in the multiphase interleaved configuration. The powers required are measured in kilowatts.

In this scope, a widely adopted solution is that of using DC-DC switching electronic converters. By varying the on/off time ratio of the switch, also known as the duty cycle, the output voltage remains regulated, even if the output current or the input voltage vary. This conversion method is very efficient unlike the linear method that dissipates power. Thanks to their high efficiency, the lifetime of portable device batteries is increased.

A type of switching converter very often used, having an insulating transformer, is called a forward converter. Despite having good characteristics in terms of efficiency, due to direct power transfer, and cost, as a result of their circuital simplicity, forward converters suffer from a major limitation that makes their use problematic, particularly in high-power applications. This is due to the need to make zero the magnetic flux in the transformer core at each switching cycle, to avoid its increase and consequent saturation.

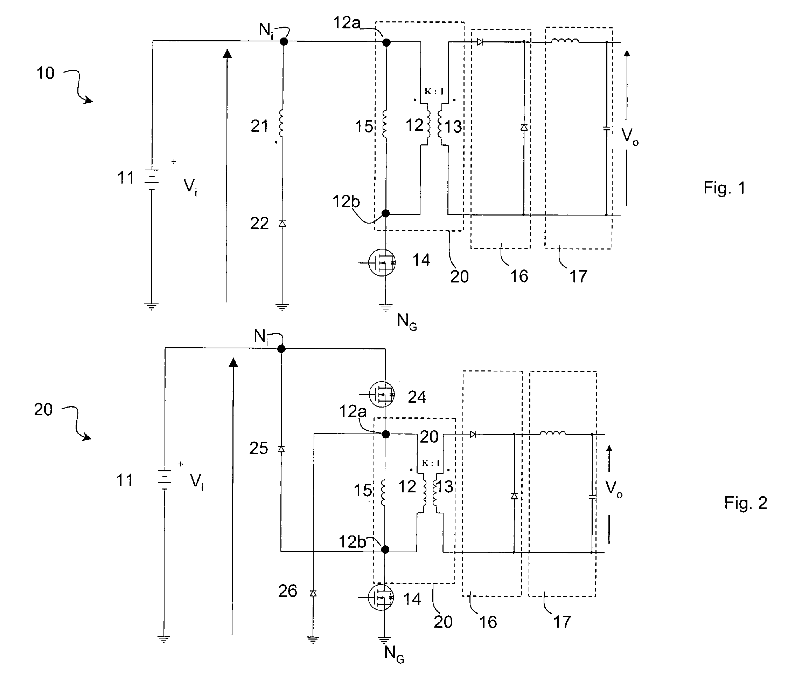

Figure 1 shows a first known solution, providing to use an auxiliary winding to allow the recirculation of the magnetization current through a diode on the input generator, thereby ensuring the non-dissipative reset of the core.

Said converter apparatus is indicated as a whole with the reference numeral 10, while the reference numeral 11 indicates an input generator, that is a source of direct voltage determining an input voltage $V_i$ to an input node $N_i$ Such input node $N_i$ is connected to a first end 12a of a primary winding 12 of a transformer 20. A second end 12b of such primary winding 12 is then connected by means of a switch 14, that is a switching device represented by a field-effect transistor, particularly a MOSFET, to a ground node $N_G$, as provided for by the forward configuration. Numeral 15 indicates the magnetization inductance, connected between the input node $N_i$ and the ground node $N_G$. A secondary winding 13 of transformer 20 envisages at its output ends 13a and 13b a diode circuit 16, comprising series diode in order to select only the positive portions and a parallel diode in order to recirculate current if the transformer voltage 20 is zero or negative. Downstream of such diode circuit 16 an LC filter 17 is provided on the output terminals of the converter apparatus 10, where the output voltage $V_o$ is formed.

As mentioned before, in such framework an auxiliary winding 21 is provided with a series diode 22, connected in parallel to the input generator 11, in order to allow the recirculation of magnetization current.

Since, in order to make null the magnetization current, the OFF time, or interval, of switch 14 must be greater than or equal to the ON time, because in the converter the reset voltage $V_{reset}$ forming on the primary winding during the OFF time is equal to the input voltage, this involves a limitation of the duty cycle, hereafter indicated as $\delta$, at a theoretical maximum value of 50% (40-45% in practice). This limitation is translated into a limitation of the turns ratio K of transformer 20:

$$V_o = \delta V_i / K \rightarrow K < 0.5 V_{imin} / V_o$$

where $V_{imin}$ indicates the minimum input voltage.

This affects the peak and effective currents of the switches and consequently the efficiency of the system. A further criticality of this solution is represented by the voltage that the switch has to bear, being twice the input voltage $V_i$.

Figure 2 shows a converter apparatus 20 having a two-switch topology circuit, a first switch 14 being connected between the second end 12b of the primary winding and the ground node $N_G$, called low-side, and a second switch 24 being connected between the first end 12a and the input node $N_i$, also called high-side. The two switches are operated synchronously and with the same duty cycle. The circuit comprises a first recirculation diode 25 and a second recirculation diode 26. Such a configuration solves the problem of the voltage that the only switch has to bear and allows the reset of the transformer core 20, keeping the maximum drain-source voltage, $V_{DS}$, of the two devices at the input voltage Vi. This configuration is also subject to the limitations of the duty cycle $\delta$ and the turns ratio K described above.

In order to allow the operation with duty cycles greater than 50%, in the prior art the so-called clamp techniques are applied, respectively of dissipative type, the so-called RCD circuits, and non-dissipative type (active clamp). In both cases a capacitor is used wherein magnetization energy is stored at each switch-off interval. Such energy is then dissipated in a resistor in the former case, or returned to the system by means of an auxiliary switch in the latter case.

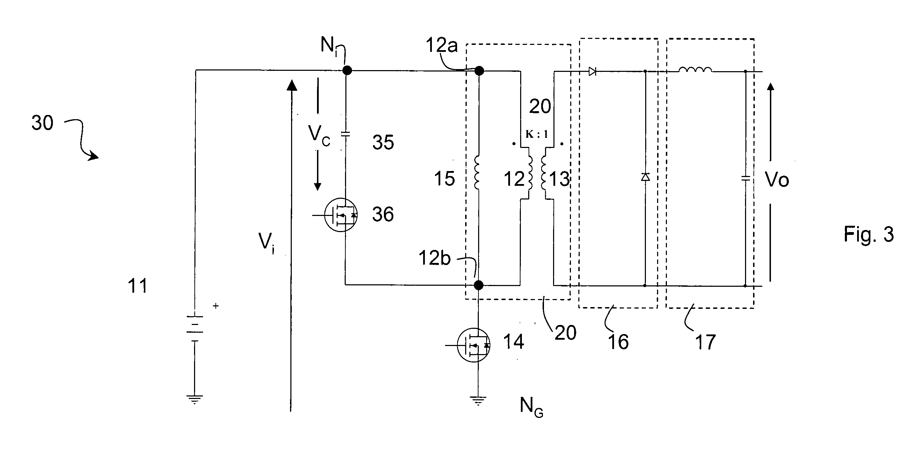

By way of non-limitative example, figure 3 shows a converter apparatus 30 equipped with active-clamp circuit, having a capacitor 35 connected between the input node $N_i$ and the drain electrode of an auxiliary switch 36 whose source electrode is connected to the second end 12b of the primary winding 12.

According to the operating duty cycle, the voltage on the capacitor must meet such values so that the core reset is guaranteed. In the case of RCD, this is guaranteed by the design specifications, while in the active-clamp the switching mode of the auxiliary switch, operating in such a way that it is essentially ON when the primary switch is OFF, envisaging dead times and dedicated timing, forces an operating mode in which the voltage $V_c$, formed at the end of capacitor 35, is exactly the voltage that guarantees the correct core operation. It is clear that the RCD solution is not applicable in all circumstances wherein high efficiency is required both for energy and for thermal sizing reasons.

As for the circuital solution depicted in figure 3, by imposing the Volt·Second balance condition at the ends of magnetization inductance 15 it is possible to obtain the equations that determine its operation and that allow the determination of the reset voltage, $v_{reset}$, and the maximum voltage $V_{DS}$ at the main switch 14:

$$\delta \cdot V_i = (1 - \delta) \cdot V_{reset}$$

from which:

$$V_{reset} = \delta \cdot V_i / (1 - \delta) = K \cdot V_i \cdot V_o / (V_i - K \cdot V_o)$$

$$V_{DS} = V_i + V_{reset} = V_i / (1 - \delta) = V_i^2 / (V_i - K \cdot V_o)$$

From the above-indicated equations it is clear that as the turns ratio K increases, both the reset voltage $V_{reset}$ (the system self-adjusts so as to ensure the correct magnetic flux regime in the core), and the drain-source voltage $V_{DS}$ increase. The latter, in the topology described, is the sum of reset voltage $V_{reset}$, present at the ends of clamp capacitor 35, that is the voltage on capacitor $V_c$, and input voltage $V_i$. The duty cycle $\delta$ settles at values that can be higher than 50% in situations of low input voltage. The limit situation is when $K_{max} = V_{imin} / V_o$, a situation in which $\delta \rightarrow 1$, $V_{reset}$ and $V_{DC} \rightarrow \infty$. Therefore, the active clamp allows the working range to be extended in terms of duty cycle allowing the increase of the turns ratio K and, as a consequence, an improvement in efficiency; however, it has higher drain-source voltage requirements than the main switch, a voltage that is not completely exploited for the magnetic core reset ($V_{DS} > V_{reset}$).

The object of the present invention is to solve the drawbacks of the prior art and to create a solution for a DC-DC forward converter apparatus that allows the maximum voltage exploitation of the switching devices and that extends the duty cycle range beyond 50%, ensuring a more convenient sizing of the transformer.

According to the present invention, such an object is achieved thanks to a DC-DC converter apparatus, as well as a corresponding conversion method having the characteristics described in detail in the annexed claims.

The invention will be described with reference to the attached drawings, provided by way of a non-limitative example, wherein:

- Figures 1, 2, and 3 have already been illustrated above;
- Figure 4 represents a schematic circuit diagram of a converter apparatus according to the invention;
- Figure 5 represents a schematic circuit diagram of an alternative embodiment of the converter apparatus according to the invention;
- Figure 6 represents an illustrative diagram of a timing used by the converter apparatus according to the invention;
- Figure 7 represents an illustrative diagram of determined voltages in the converter apparatus according to the invention;
- Figure 8 represents a schematic circuit diagram of a further alternative embodiment of the converter apparatus according to the invention in a multi-phase configuration;

Briefly, the apparatus according to the invention uses a two-switch forward topology circuit, such as the one exemplified in figure 2, in order to provide a reset voltage equal to the maximum drain-source voltage of switching devices and to obtain the maximum exploitation of the switching device voltage. Moreover, such a two-switch forward topology circuit comprises a diode-capacitor clamp circuit adapted to obtain a voltage higher than the input voltage in order to extend the duty cycle range beyond 50%. The apparatus according to the invention also comprises a lower power additional circuit consisting of a switch, a diode and an inductor, that forms a controlled current load adapted to keep the core reset voltage constant while the operating conditions of the input voltage and output current system vary, redirecting the magnetization current onto the input generator.

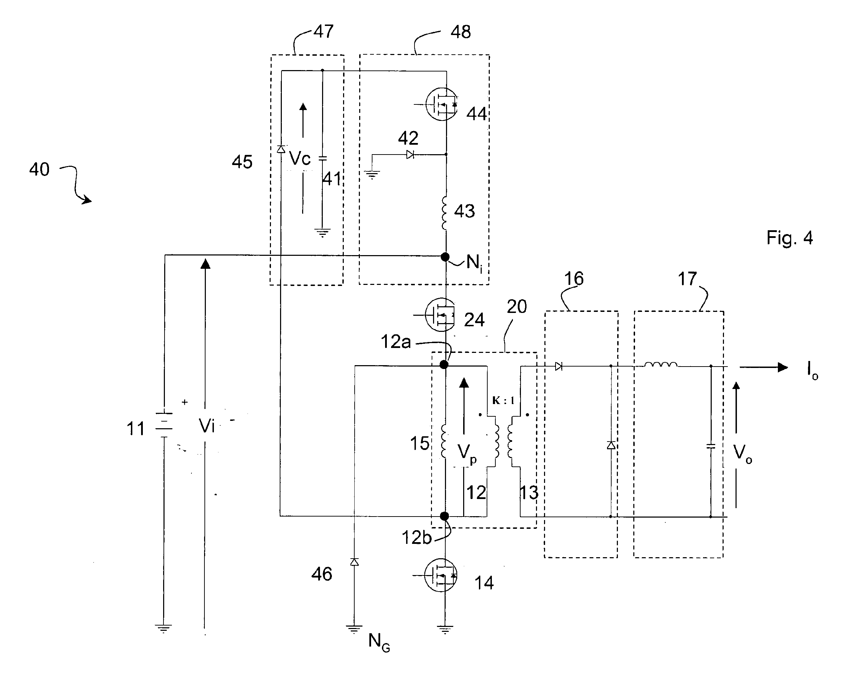

Figure 4 represents a preferred embodiment of the converter apparatus according to the invention, indicated as a whole with the numerical reference 40. Elements with similar functions to those of the circuits illustrated above in figures 1, 2, 3 are indicated by the same numerical references. It can be noted that the topology shown in figure 4 replicates the general aspects of the two-switch topology depicted in figure 2, and therefore comprises the low side switch 14 and the high side switch 24. In this case two recirculation diodes are also provided to recirculate the magnetization current. A first recirculation diode 45 is therefore provided, whose anode is connected to second end 12b of primary winding 12, but, unlike what happens to diode 25 in the circuit of figure 2, where such diode recirculates the current on the input node $N_i$, the cathode of the first recirculation diode 45 is connected to an end of capacitor 41. A second recirculation diode 46 is also provided, whose anode is connected to ground node $N_G$ and whose cathode is connected to the first end 12a of the primary winding. The first recirculation diode 45 and capacitor 41, whose second end is connected to ground, identify a clamp circuit 47. In the context of such a clamp circuit 47 the first recirculation diode 45 serves as rectification device, or as rectifying device. It can be appreciated that such a rectification device can created with different elements from a simple diode, such as for example with a diode-configured MOSFET device. Within the same framework, the difference with respect to the active-clamp circuit represented for example in figure 3 can be highlighted, where the capacitor 35 is associated, instead of with a rectification device, with an auxiliary switch 36 driven by a special signal supplied by an external controller, and usually having opposite phase with respect to switches 14 and 24.

Indicating the capacitor voltage 41 with $V_c$, during the switch-OFF interval the magnetization current $I_m$ recirculates through two recirculation diodes 45 and 46 from ground towards capacitor 41, forcing such reset voltage $V_c$ onto transformer core 20. Unlike the RCD solutions previously mentioned, the magnetization energy stored in capacitor 41 is not dissipated on a resistor, but is redirected towards the input generator 11, which may be for example a motor vehicle battery, through an additional low-power transfer circuit, consisting of one switch, one diode and one inductor. As can be noted in figure 4, such an additional charge-transfer circuit, indicated as a whole with the numerical reference 48, comprises an additional switch 44 whose drain electrode is connected to the ungrounded end of capacitor 41 and whose source electrode is connected to the cathode of a diode 42 connected to the other grounded end, as well as an inductor 43 connected to the other end of input node $N_i$. Such an additional charge-transfer circuit 48 forms a controlled current load adapted to keep constant the reset voltage $V_{reset}$ applied to the primary winding 12 determined by the capacitor voltage $V_c$ when the system operating conditions vary, particularly with regard to the input voltage $V_i$ and the output current $I_o$. The controlled current load, or charge-transfer circuit, operates as a step-down converter, preferably in current mode, whose characteristic consists in that its own control loop acts with the aim of adjusting the input voltage instead of the output voltage. Such an adjustment allows a clamp voltage to be obtained on capacitor 41, and therefore a reset voltage that is constant on the whole operating field of the system, unlike for example the active clamp configuration in figure 3. Moreover, the additional switch 44 control can be completely unrelated to the control of the main switches 14 and 24, thereby determining the advantage of greater control simplicity.

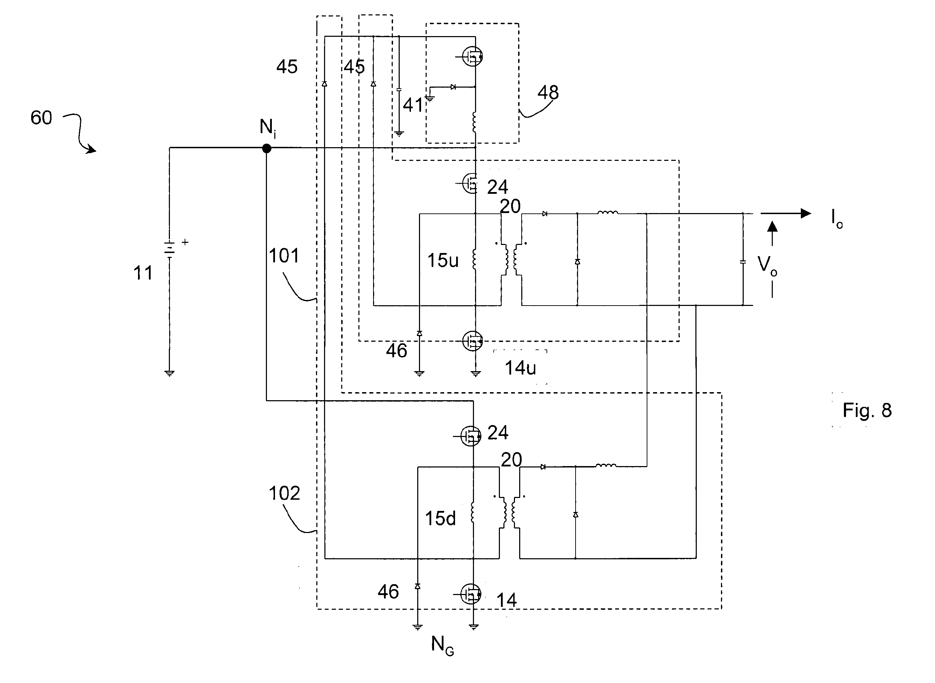

A further advantage with respect to the active clamp circuit in figure 3 consists in the possibility to centralize the clamp capacitor 41 and the additional charge-transfer circuit 48 in the case of use in multi-phase interleaved structures. Figure 8 shows in this respect the configuration of a converter apparatus 60 with multi-phase interleaved structure, with two phases, respectively indicated by 101 and 102. As can be noted, the two phases 101 and 102 *per se* represent a similar topology to that of apparatus 30 in figure 4, that is each phase has a two-switch forward topology. The two phases 101 and 102 are arranged in parallel with respect to the input node $N_i$, to which they are connected by means of the drain electrodes of the respective high-side switching devices 24. The drain electrodes of the respective low-side switching devices 14 are, on the other hand, connected by means of the respective first recirculation diodes 45 to the single capacitor 41, that is, as was mentioned before, centralized for both the phases 101 and 102, like the additional charge-transfer circuit 48 that recirculates current in the input node $N_i$.

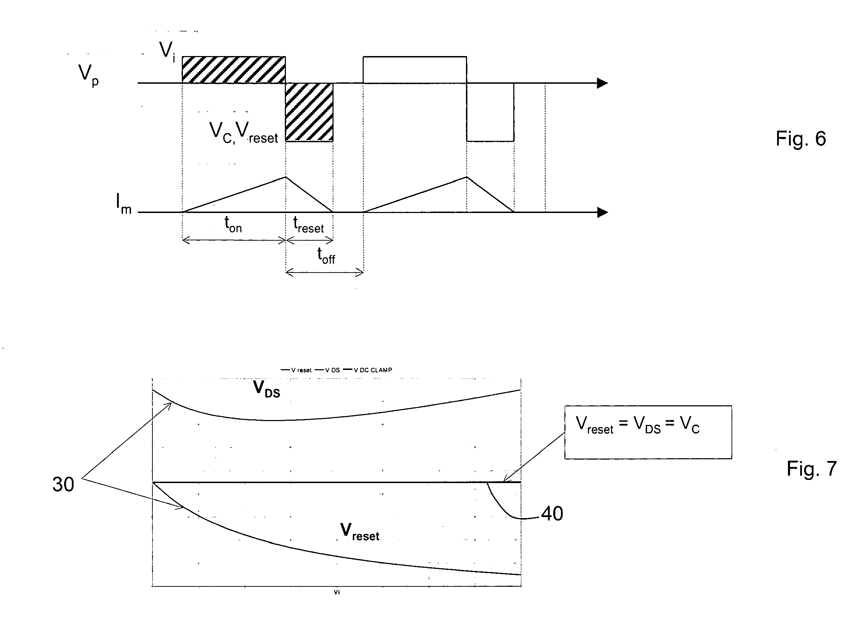

The determination of the necessary current depends on considerations on the reset time of magnetization current $I_m$ with respect to the available OFF time. With reference to the diagram in figure 6, depicting the timing of a voltage $V_p$ on the primary winding 12, and the trend of magnetization current $I_m$, the two outlined areas in figure 6 must be equal for the Volt·Second balance at the primary winding 12, from which the following equations is derived:

$$t_{reset} = V_i \cdot t_{on} / V_C$$

where $t_{reset}$ is the reset time, or interval, during which the reset voltage is applied to the primary winding 12.

Imposing the condition that reset time $t_{reset}$ must be lower than the available switch-off time $t_{off}$, as in figure 6 where it is shown within the interval defined by such switch-off time $t_{off}$, or, in other words the sum of the ON time and the reset time must not exceed the overall switching time, the following is obtained:

$$t_{on} + t_{reset} < T \rightarrow \quad t_{on} + V_i \cdot t_{on} / V_C < T \quad \rightarrow$$
$$\delta < (1 + V_i / V_C)^{-1}$$

$$\delta = K \cdot V_o / V_i \rightarrow \quad K < (V_o / V_i + V_o / V_C)^{-1}$$

The most strict condition for the turns ratio K is obtained at the minimum input voltage:

$$K < (V_o / V_{imin} + V_o / V_C)^{-1}$$

It should be noted that, for a clamp voltage $V_c$ equal to the input voltage $V_i$ the restriction is obtained for the maximum turns ratio $K_{max} = 0.5 \, V_{imin} / V_o$ imposed for the traditional topologies with maximum duty cycle 50%. As was mentioned before for active-clamp converter 30 in figure 3, the availability of a higher clamp voltage $V_c$ allows an extension of the operating range of duty cycle $\delta$ and a subsequent increase of the maximum turns ratio allowed $K_{max}$. Also in this case, there is a limit situation for $V_c \rightarrow \infty$ where $K_{max} = V_{imin} / V_o$, with $\delta \rightarrow 1$. The clamp voltage $V_c$ can be increased with the only restriction of being sized with margin with respect to the break-down voltage of the main switch 14, that is the value of $V_{DSmax}$. Given an extended range of input voltages, it is possible to define a clamp voltage $V_c$ equal to the maximum input voltage $V_i$. This allows the best performance to be obtained with the maximum voltages being equal. The diagram in figure 7 shows this particular case compared to the curves relative to the active-clamp topology converter 30 of figure 3 in the same operating conditions and with the same turns ratio.

As is clear from figure 7, the clamp voltage $V_c$, indicated by the central line, is kept stable on the whole range of input voltage $V_i$. Such voltage also represents the rating of $V_{DS}$, lower then the one required by the active-clamp solution (first curve from the top).

According to the invention it is also provided that it operates when the circuit is powered on in such a way that it allows the setting of the correct voltage on the clamp capacitor before the system is required to work in the regimen conditions at which the magnetic core could reach saturation. Particularly, it is envisaged to operate a duty cycle limitation until the desired clamp voltage is reached. In this stage, the charge-transfer circuit is automatically inhibited receiving a feedback signal lower than its set-point. By way of example, the duty cycle limitation can envisage starting from a predefined value lower than 50% and subsequently letting the apparatus to adjust its duty cycle, not necessarily with values higher than 50%. Obviously, there may be different types of modes according to which such an operation can be carried out.

Therefore, the advantages of the solution proposed include having a maximum duty cycle $\delta$ over 50%, a turns

ratio $K < V_{imin}/V_o$, a theoretical limit value with reset vol tage $\rightarrow \infty$, a reset voltage $V_{reset}$, limited to the maximum voltage $V_{DS}$ that can be sustained, while the charge control of the clamp capacitor is not a critical factor.

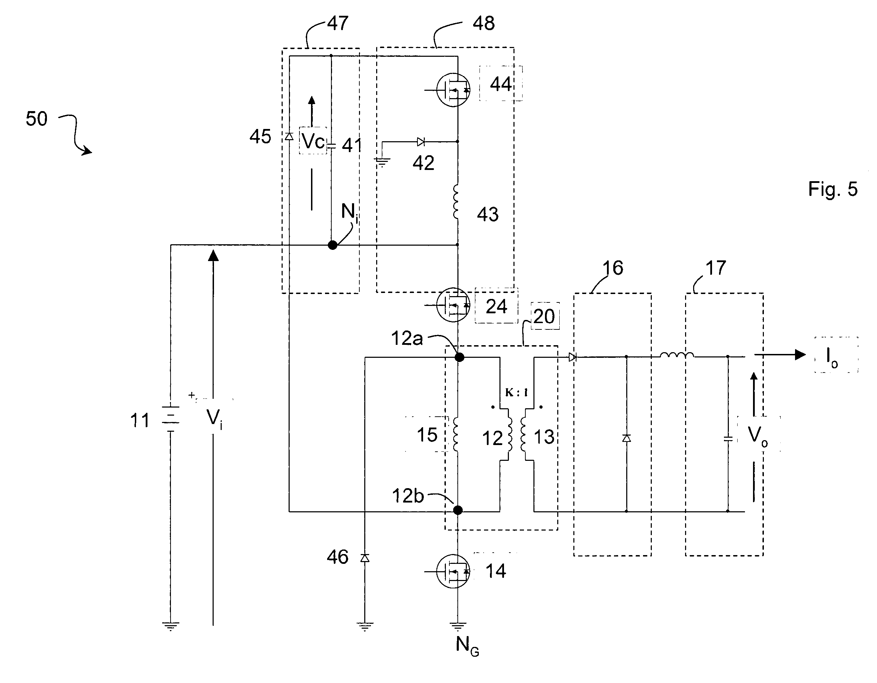

Figure 5 shows an alternative embodiment 50 of the converter apparatus of figure 4, wherein the capacitor 41 refers to the input voltage $V_i$, instead of the ground. In this case, the reset voltage $V_{reset}$ being equal, the voltage sustained by it is lower ($V_c = V_{reset} - V_i$). The configuration of figure 4 with the capacitor 41 referring to ground, allows better control of the voltage $V_{DS}$ of the main switch 14 in the presence of rapid increases of the input voltage vi.

It can be noted that both in the case of the converter apparatus 40 in figure 4 and in the case of the converter apparatus 50 in figure 5, the capacitor 41 refers to a fixed potential, the ground in figure 4, the input voltage $V_i$ in figure 5, hence allowing easier adjustment of the capacitor voltage.

Naturally, various modifications to the construction details and the embodiments can be possible, within the spirit of the invention according to that described and disclosed merely by way of example, without departing from the scope of the present invention.

The DC-DC forward converter apparatus according to the invention is particularly suitable for application in the hybrid vehicles sector, as well as in electric vehicles, since it allows to operate with high voltages. Moreover, such apparatus is advantageously suitable for the multi-phase interleaved configuration, with the possibility of centralizing the clamp capacitor and the charge-transfer circuit.

The application of the DC-DC converter apparatus according to the invention extends, obviously, to all the technological fields using DC-DC converters, such as for example apparatus for mobile telephone communications or portable computers.

**Claims**

1. DC-DC forward converter apparatus comprising:

   - a transformer (20) including a primary winding (12) comprising a first end (12a) and a second end (12b), said transformer (20) being subject to switching cycles ($t_{on}$, $t_{off}$) of a voltage ($V_p$) on said primary winding (12);
   - a first switching device (14) arranged so as to be connected between said second end (12b) and a ground node ($N_G$) ;
   - a second switching device (24) arranged so as to be connected between said first end (12a) and a supply node ($N_i$) ;

   said first switching device (14) and said second switching device (24) operating under the control of a timing associated with said switching cycles ($t_{on}$, $t_{off}$), synchronously and with a same duty cycle, according to the adjustment of output quantities ($V_o$, $I_o$) of said converter apparatus; said converter apparatus being configured to operate a reset of said transformer (20), within a switch-off interval (toff) defined by said timing ($t_{on}$, $t_{off}$), resulting in a reset voltage ($V_{reset}$) as voltage on said primary winding ($V_p$), and comprising means (45, 46) to reset the magnetic flux in the core of said transformer (20) at each switching cycle allowing the recirculation of a magnetization current ($I_m$) from said core in order to make null said magnetization current ($I_m$),
   **characterised in that**
   said converter apparatus also includes a clamp circuit (47) comprising a capacitor (41) for storing magnetization energy as capacitor voltage ($V_c$) in order to generate a reset voltage ($V_{reset}$) greater than the supply voltage ($V_i$) of the converter and a rectification device (45).

2. Converter apparatus according to claim 1, **characterised in that** said clamp circuit (47) is electrically associated to a charge-transfer circuit (48) forming a controlled current load to direct said magnetization current ($I_m$) towards the supply node ($N_i$) and to adjust said reset voltage ($V_{reset}$) to a constant value.

3. Converter apparatus according to claim 1 or 2, **characterised in that** said clamp circuit (47) is arranged between said second end (12b) of the primary winding (12) and said supply node ($N_i$).

4. Converter apparatus according to claims 1 or 2 or 3, **characterised in that** said rectification device (45) of said clamp circuit (47) is arranged between said second end (12b) and an end of the clamp capacitor (41), particularly said rectification device (45) being a diode.

5. Converter apparatus according to one or more claims from 1 to 4, **characterised in that** said means (45, 46) to reset the magnetic flux comprise a first recirculation diode (45) of the magnetization current ($I_m$) having its own anode connected to said second end (12b) and a second recirculation diode (46) connected between said first supply end (12a) and the ground node ($N_G$), particularly said diode of the clamp circuit being said first recirculation diode (45), whose cathode is connected to an end of the clamp capacitor (41).

6. Converter apparatus according to the previous claim, **characterised in that** said charge-transfer circuit (48) comprises an auxiliary switching device (44) having its drain electrode connected to said end of the clamp capacitor (41) and its source electrode connected to the supply node ($N_i$) through a network comprising a diode (42) and an inductor (43).

7. Converter apparatus according to one or more of the previous claims, **characterised in that** said first switching circuit (14) comprises a field-effect switching device having its drain electrode connected to said second end (12b) and its source electrode connected to the ground node ($N_G$) and **in that** said second switching circuit (24) comprises a further field-effect switching device having its source electrode connected to said first end (12a) of the primary winding (12) and its drain electrode connected to the supply node ($N_i$).

8. Converter apparatus according to one or more of the previous claims, **characterised in that** a second end of the clamp capacitor (41) is connected to the ground node ($N_s$).

9. Converter apparatus according to one or more of the previous claims, **characterised in that** a second end of the clamp capacitor (41) is connected to the supply node ($N_i$).

10. Converter apparatus according to one or more of the previous claims, **characterised in that** it is included in a conversion system to transfer energy from the high-voltage network of an electric or hybrid motor vehicle.

11. Method for DC-DC forward conversion envisaging to apply switching cycles to a transformer (20) comprising a primary winding (12) including a first end (12a) and a second end (12b), comprising the following operations:

using at least a first switching device (14) connected between said second end (12b) and a ground node ($N_G$) and a second switching device (24) connected between said first end (12a) and a supply node ($N_i$), operating under the control of a timing ($t_{on}$, $t_{off}$) associated with said switching cycles, synchronously and with a same duty cycle according to the adjustment of output quantities ($V_o$, $I_o$) of said converter apparatus,
operating a reset of said transformer (20), within a switch-off interval (toff) defined by said timing ($t_{on}$, $t_{off}$), determining a reset voltage ($V_{reset}$) such as the voltage on said primary winding (Vp);
resetting the magnetic flux in the core of said transformer (20) at each switching cycle allowing the recirculation of a magnetization current ($I_m$) from said core in order to make it null,
**characterised in that**
comprises also storing magnetization energy in order to generate a reset voltage ($V_{reset}$) greater than a supply voltage ($V_i$) of the converter using a capacitor (41) to store said magnetization energy as capacitor voltage ($V_c$), by means of a rectification device (45), in particular a diode.

12. Method according to claim 11, **characterised in that** comprises adjusting said capacitor voltage ($V_c$) to a constant value through a charge-transfer circuit (48) configured also to direct said magnetization current ($I_m$) towards the supply node ($N_i$).

13. Method according to claim 12, **characterised in that** said charge-transfer circuit (48) operates as controlled current load according to a step-down converter mode, particularly of current-mode type.

14. Method according to claims 11, 12 or 13, **characterised in that** comprises sharing among a plurality of phases (101, 102) in a multi-phase interleaved configuration said capacitor (41) in order to store said capacitor voltage ($V_c$) and said charge-transfer circuit (48).

15. Method according to one or more claims from 11 to 14, **characterised in that**, when the converter is initially powered on, comprises limiting a converter duty cycle until the desired reset voltage is achieved.

Fig. 1

Fig. 2

EP 2 187 515 A1

Fig. 3

$N_i$  12a  12  20  κ:1  20  16  17

$V_C$  35  36  15  12  13  14  $V_o$

30  11  $V_i$  12b  $N_G$

EP 2 187 515 A1

Fig. 4

Fig. 5

Fig. 6

Fig. 7

Fig. 8

EP 2 187 515 A1

Europäisches
Patentamt

European
Patent Office

Office européen
des brevets

# EUROPEAN SEARCH REPORT

Application Number

EP 08 42 5725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 6 952 354 B1 (TA-YUNG YANG ET AL.)<br>4 October 2005 (2005-10-04)<br><br>* abstract *<br>* figure 2 *<br>* column 1, line 6 - line 11 *<br>* column 1, line 39 - line 58 *<br>* column 2, line 49 - line 67 *<br>* column 3, line 34 - line 39 *<br>* column 3, line 50 - line 54 *<br>----- | 1-5,7,8,<br>10-12,15<br>6,9,13 | INV.<br>H02M3/335 |
| X | EP 1 936 791 A (SIEMENS)<br>25 June 2008 (2008-06-25)<br>* abstract *<br>* paragraphs [0021] - [0025] *<br>* figures 2,3 *<br>----- | 1,9,11 | |
| X | WO 2006/106040 A (SIEMENS)<br>12 October 2006 (2006-10-12)<br>* page 9, line 16 - page 10, line 2 *<br>* figure 2 *<br>----- | 1-15 | |
| X | DEEPAK M. DIVAN ET AL.: "A Unity Power Factor Forward Converter."<br>IEEE, 1992, pages 666-672, XP010063545<br>* figure 2 *<br>----- | 1,11 | TECHNICAL FIELDS SEARCHED (IPC)<br><br>H02M |
| Y | DE 40 23 253 A (ANDREAS BOEHRINGER)<br>23 January 1992 (1992-01-23)<br>* column 13, line 49 - line 63; figure 17 *<br>----- | 6,13 | |
| Y | YILEI GU ET AL.: "RCD Reset Dual Forward DC/DC Converter."<br>IEEE, 2004, pages 1465-1469, XP010739712<br>* figure 4 *<br>-----<br>-/-- | 9 | |

The present search report has been drawn up for all claims

| Place of search | Date of completion of the search | Examiner |
|---|---|---|
| The Hague | 12 March 2009 | Lund, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 42 5725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 291 287 A (HARRIS CORPORATION) 17 January 1996 (1996-01-17) * figure 5 * * page 5, line 17 - line 19 * * page 5, line 28 - line 30 * ----- | 1,11 | |
| | | | TECHNICAL FIELDS SEARCHED (IPC) |

The present search report has been drawn up for all claims

| Place of search | Date of completion of the search | Examiner |
|---|---|---|
| The Hague | 12 March 2009 | Lund, Michael |

EPO FORM 1503 03.82 (P04C01)

**ANNEX TO THE EUROPEAN SEARCH REPORT
ON EUROPEAN PATENT APPLICATION NO.**

EP 08 42 5725

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2009

| Patent document cited in search report | | Publication date | Patent family member(s) | | Publication date |
|---|---|---|---|---|---|
| US 6952354 | B1 | 04-10-2005 | NONE | | |
| EP 1936791 | A | 25-06-2008 | AT | 504122 A4 | 15-03-2008 |
| WO 2006106040 | A | 12-10-2006 | CN | 101156305 A | 02-04-2008 |
| | | | EP | 1867035 A1 | 19-12-2007 |
| | | | JP | 2008535470 T | 28-08-2008 |
| | | | KR | 20070121827 A | 27-12-2007 |
| DE 4023253 | A | 23-01-1992 | NONE | | |
| GB 2291287 | A | 17-01-1996 | DE | 19523576 A1 | 15-02-1996 |
| | | | FR | 2722926 A1 | 26-01-1996 |
| | | | US | 5646832 A | 08-07-1997 |

EPO FORM P0459

For more details about this annex : see Official Journal of the European Patent Office, No. 12/82